# EUROPEAN PATENT SPECIFICATION

(11) **EP 3 597 476 B1**
(45) Date of publication and mention of the grant of the patent: **18.11.2020**
(21) Application number: 18183678.4
(22) Date of filing: 16.07.2018
(51) Int. Cl.: B60N 2/90

(54) **VEHICLE SEAT MASSAGE SYSTEM**
FAHRZEUGSITZMASSAGESYSTEM
SYSTÈME DE MASSAGE POUR SIÈGE DE VÉHICULE

(43) Date of publication of application: 22.01.2020
(73) Proprietor: KA Group AG, 8004 Zurich (CH)
(72) Inventor: Kasperczyk, Grzegorz, 01-164 Warszawa (PL); Zabielski, Pawel, 02-672 Warszawa (PL); Galazka, Kazimierz, 99-335 Witonia (PL); Lanko, Mateusz, 37-565 Rozwiernica (PL)
(74) Representative: Uexküll & Stolberg

(56) References cited:
- WO-A1-2015/039701
- US-A- 5 558 398

## Description

The present invention is directed to a vehicle seat massage system comprising:
a pump for providing pressurized air;
an array of distributed inflatable air cells equipped with an air conduit structure which has an access port connected to receive air flow from the pump and which has for each air cell of the array a flow connection for air flow to and from the air cell;
a plurality of flow resistors arranged in the array of air cells such that the flow resistance to the air cells is increasing starting from the access port with increasing distance from the access port, and that height expansion of air cells due to inflation state is propagating in a direction from the access port through the array and at last reaching a pneumatic end region of the array with a time delay;
a valve arranged between the pump and the access port of the array, wherein the valve is configured to be switchable between an inflation state and a deflation state, wherein the valve is arranged to permit, in the inflation state, air flow from the pump to enter the access port of the array, and to permit, in the deflation state, air to flow from the air cells out of the access port of the array to be vented off; and
means for controlling the valve to switch between inflation state and deflation state.

Drivers and passengers of motor vehicles, especially when driving long distances, often experience discomforts caused by long time static posture when seated in a vehicle seat. This may not only be felt as being uncomfortable but can also cause back pain, and in the long term even lead to permanent impairment of health, in particular for professional drives such as truck and bus drivers. To provide a remedy the automotive industry since some time offers vehicle seats with integrated massage systems in the seat body, in particular in the seat back below the seat cover.

Such a massage system for a vehicle seat typically utilizes a pump as a pressure source and an array of distributed inflatable air cells interconnected by an air conduit structure which is in flow communication with the pump.

An early example of such massage system is disclosed in US 5 135 282 B1. In this massage system a series of inflatable air cells is disposed along the seat back under the seat back cover. An air conduit structure is receiving pressurized air from the pump and is supplying this pressurized air to the air cells for sequentially inflating/deflating the series of air cells. For this purpose a common supply line interconnects the air cells in series, and a venting line interconnects the air cells in series. In order to produce a propagating sequential inflation along said series of air cells starting from the first cell and continuing cell by cell to the last cell at the end of the series, a number of electrically controllable valves (e.g. solenoid valves) and a control unit are provided. In order to initiate an inflation cycle the control unit opens a first valve in the supply line upstream of the first air cell while keeping the remaining valve in a closed state. The control unit is arranged to open the remaining valves along said series of air cells sequentially such that, after the first air cells has been inflated, the valve upstream of the second air cell is opened to inflate the second air cell, etc. until all air cells along said series of air cells are inflated. After inflation of all air cells the control unit stops the pump and the venting line is opened to deflate the air cells. It is apparent that in such an arrangement for sequentially inflating air cells in a distributed arrangement of air cells a large number of electrically controllable valves is needed. This is not only a drawback because of the costs of the controllable valves, but also make set up and installation of the massage system time consuming since cables connecting the control unit with each of the large number of controllable valves have to be installed.

In WO 2015/039701 A1 a massage system for a vehicle seat is described which operates with a drastically reduced number of controllable valves by effecting delay of inflation between subsequent air cells pneumatically with flow resistors. The preamble of claim 1 is based on this document WO 2015/039701 A1. The massage system comprises an array of distributed inflatable air cells equipped with an air conduit structure which has an access port connected to the pump and which has for each air cell of the array a flow connection for air flow to and from the air cell. In the particular embodiments disclosed there are for example one or two columns of air cells arranged in a series of air cells. For example two parallel columns of air cells are combined with a main air conduit extending along the columns, for example in between the columns, and having a flow connection to each of the air cells. Between access port and pump a single controllable valve is provided which either allows air from the pump to be conveyed to the main air conduit to start inflation of the air cells, or opens the main air conduit to the environmental atmosphere in order to cause deflation of the air cells. A control unit is connected to the controllable valve and is programmed to switch the valve between inflation state and deflation state. In order to cause a sequential inflation of the air cells along the series of air cells in the columns a number of flow resistors is arranged in the air conduit structure in order to pneumatically delay inflation of air cells which are further away from pump flow entry into the main conduit. By the flow resistors the total flow resistance from the access port is increasing air cell by air cell the further a particular air cell is distanced from the pump flow entry into the air conduit structure. In this manner the expansion of air cells to inflated state is propagating from the air cell closest to the access port through the array of air cells and reaching at last a pneumatic end region of the array with a time delay, i.e. the pneumatic end region is the air cell(s) which at last reaches a predetermined pressure level in the array of air cells. In case of series of air cells the pneumatic end region of the array is the last air cell in the series which is furthest away from the pump air flow entry to the array of air cells. By properly dimensioning the flow resistance of the flow resistors a desired time offset between pneumatically subsequent air cells can be achieved so that a wavefront of inflation propagates through the series of air cells of the array with only a single controllable valve at the access port of the array of air cells, whereas the relative delay of inflation between subsequent air cells is achieved by passive flow restrictors. In WO 2015/039701 A1 the flow resistors are for example arranged and dimensioned in such a manner that the time delay between a cell reaching 80% of its fill capacity to the next subsequent cell reaching 80% of its fill volume is between 0.5 seconds and 30 seconds.

It is an object of the present invention to further simplify the design of such a vehicle seat massage system, in particular to avoid any need for electrically controllable valves to thereby provide an array of distributed inflatable air cell which can be sequentially inflated such that the inflated expansion of air cells propagates with time delay through the array, and subsequent deflation is started without need for an electrically controlled valve.

This object is achieved by a vehicle massage system comprising the features of claim 1. Preferred embodiments of the invention are set out in the dependent claims.

According to the present invention the means for controlling the valve include a pneumatic or mechanic feedback transmission connecting the pneumatic end region of the array with the valve; the feedback transmission transmits a mechanic or pneumatic signal to the valve that a predetermined inflation state, determined by the pressure exceeding a threshold level, is reached in the pneumatic end region of the array of air cells. The feedback transmission and the valve are arranged such that the valve is switched from the inflation state to the deflation state when the pressure at the pneumatic end region of the array exceeds the threshold level. In other words, the information that the pneumatic end region of the array reached a predetermined inflation state (determined by the pressure in the pneumatic end region reaching the threshold level) is mechanically or pneumatically transmitted to the valve which causes the valve to switch from the inflation state to the deflation state, thereby terminating inflation and starting a deflation phase. The feedback transmission can for example be a pneumatic transmission, as will be explained in more detail further below, by providing a feedback line (conduit) connecting the pneumatic end region of the array with the valve such that the feedback line communicates pneumatically the pressure state at the pneumatic end region of the array to the valve. Alternatively, the feedback transmission can be established by a mechanical connection; for example, there can be a membrane or flexible wall portion in communication with the pneumatic end region of the array, which membrane or flexible wall portion is configured such that it bulges to a certain extent when the pressure in the pneumatic end region exceeds the threshold level. The membrane can be connected to a string or cord which at its opposite end is connected to a control member of the valve. When the pressure in the pneumatic end region of the array reaches the threshold level and the membrane has bulged to a predetermined extent in response thereto, the attached string is pulled which mechanically transmits the movement stroke of the bulged membrane to the control member of the valve, wherein the valve is configured to be switched by such movement of the control member from the inflation state to the deflation state.

In a preferred embodiment the feedback transmission utilizes a pneumatic transmission from the pneumatic end region of the array to the valve. The valve is configured as a pneumatically controlled valve having a control port. The feedback transmission comprises a pneumatic feedback line communicating at one end with the pneumatic end region of the array and at the other end with the control port of the pneumatically controlled valve. The pneumatically controlled valve is arranged to switch from the inflation state to the deflation state when the pressure at the control port exceeds a switch level. The pressure at the control port exceeds the switch level when the pressure at the opposite end of the pneumatic feedback line connected to the pneumatic end region of the array reaches the threshold level (in case of a steady state with zero air flow in the feedback line the pressure at the pneumatic end region of the array and at the control port is the same). In this manner the pneumatically transmitted feedback from the pneumatic end region of the array of air cells is utilized to terminate an inflation cycle and to initiate deflation when the last cell(s) having the highest delay to reach its (their) inflated state get to the threshold pressure level. "Inflated state" in the sense of the present invention does not require that an air cell reached its maximum inflation level since it may be that some air cells in the array, in particular in the pneumatic end region, are not fully inflated at the end of the inflation cycle. An air cell is assumed to have reached its inflated state if its expanded height due to inflation has reached a predetermined percentage of the maximum inflated height of the air cell, for example 80% of the maximum inflated height, or any percentage between 70% and 90%. The inflated state at the pneumatic end region of the array is determined in the present case in terms of the pressure threshold level that is predetermined in such a manner that the pressure threshold level is set to such a value that this pressure value is present when a desired inflation state is reached in the air cell(s) in the pneumatic end region of the array.

A mechanically or pneumatically controlled valve can be realized in a much simpler manner than an electrically controllable valve. In a pneumatically controlled valve, for example, the input pressure of the pump and the feedback pressure from the pneumatic end region of the array of air cells can act on valve elements opposite directions against each other so that the valve can be arranged to switch from inflation state to deflation state when the pressure of the feedback line balances the input pressure to a predetermined degree.

In the embodiment of a pneumatic feedback transmission the pressure from the pneumatic end region of the array is fed back to the control port of the valve such that increased pressure at the valve control port is a feedback signal that pressure increase and expansion to the inflated state has reached the last cell(s) of the array of air cells. This indicates that the inflation cycle of the array of air cells has been completed, and the pressure increase to the threshold level in the pneumatic end region of the array triggers the following deflation of the air cells of the array by switching the valve to the deflation state.

The switch threshold level of the pneumatically controlled valve can be set depending on the design of the array of air cells, of the design of the feedback line and the desired expansion height of the air cell(s) due to inflation in the pneumatic end region by determining the pressure at the control port when the pressure reaching increase to the threshold level in the pneumatic end region of the array has caused a desired degree of inflation in the pneumatic end region.

In this manner an inflation and deflation cycle of the array of air cells is carried out without need for controllable actuators, in particular without need for an electrically controlled valve like a solenoid valve.

In a preferred embodiment the pneumatically controlled valve comprises a valve housing having, besides the control port, a pump port in communication with the pump, an array port connected to the access port, and a venting port communicating with the environmental atmosphere. In the interior of the valve housing a piston as a valve element is biased by a spring to a position corresponding to the deflation state of the valve when no input pressure from the pump is applied to the pump port, wherein in this position the piston permits flow communication from the array port to the venting port. Furthermore, the valve is configured such that, when input pressure from the pump is present at the pump port, the piston is displaced against the bias of the spring to a position corresponding to the inflation state of the valve in the piston allows flow communication from the pump port to the array port, until the pressure at the control port reaches the threshold pressure which causes the piston to be displaced again to the position corresponding to the deflation state of the valve.

In a preferred embodiment the valve housing defines a valve chamber in its interior in which the piston is housed to be slidable in longitudinal direction. The pump port and the control port are located at opposite end faces of the valve housing such that pressure in the pump port exerts a force on the piston in the first direction and pressure in the control port causes a force on the piston opposite to the first direction. The array port and the venting port are located in a sidewall of the valve housing. The spring exerts a bias force in longitudinal direction on the piston urging it to the position corresponding to the deflation state when there is no pump pressure on the pump port. When pump pressure is applied to the pump port, the piston is thereby displaced against the spring bias, thereby opening a bypass channel in an inner wall of the valve chamber permitting air flow from the pump port to the array port to establish the inflation state of the valve. An elastic membrane closes an interior space of the valve housing next to the control port such that pressure at the control port causes the membrane to be bulged inwardly and to abut on an actuating end face of the piston to displace the piston towards the position corresponding to the deflation state of the valve.

In a preferred embodiment the array of air cells comprises at least one series of subsequent air cells, and the flow resistors are arranged such that the flow resistance is increasing starting from a first air cell of the series which is next to the access port of the array and is increasing along that series of air cells form air cell to air cell to a last air cell in the series of air cells such that the air cells of the series of air cells are inflated in sequence with the time offset between each pair of subsequent air cells until the next subsequent air cell reaches its inflated state; as previously indicated an air cell is assumed to have reached its inflated state if its expanded height due to inflation has reached a predetermined percentage of the maximum inflation height of the air cell, for example 80% thereof. The inflation of subsequent air cells in the series propagates like a wavefront along the series until all air cells of the series are inflated. Two or more series of air cells may be arranged in parallel columns next to each other, for example to extend over the width of a backrest.

In a preferred embodiment the array of air cells comprises a main conduit extending from the access port of the array, and a plurality of air cells are arranged along the main conduit, each air cell communicating with a flow connection with the main conduit, wherein the air cells and the respective flow connections to the main conduit are distributed at different distances along the main conduit from the access port, thereby forming a single series of air cells along the main conduit or two parallel series of air cells along the main conduit, when air cells are arranged laterally on both sides of the main conduit. In a preferred embodiment the main conduit of the array extends along a straight line and the air cells are connected to main conduit to form a linear series of air cells.

In an alternative embodiment the array of air cells comprises a main conduit extending from the access port of the array, which main conduit connects the plurality of air cells in series. In this case the main conduit is not a continuous conduit but comprises conduit portions connecting subsequent air cells in series.

In a preferred embodiment including a series of air cells along a main conduit the feedback line communicates with the last air cell along the main conduit which is, in terms of length of the flow path from the access port to the respective air cell, furthest away from the access port.

In a preferred embodiment the flow resistors are dimensioned such that the time offset between an air cell reaching its inflated state and the next subsequent air cell in the series of air cells reaching its inflated state is above 0.5 s, preferably above 1 s. In a simple form the flow restrictors can be passages of reduced inner diameter disposed in conduit portions between air cells or disposed within the air cells. For further characteristics of such reduced diameter flow restrictors reference is made to above-mentioned WO 2015/039701 A1. Another type of flow resistor will be described in more detail below.

In a preferred embodiment at least some of the flow resistors of the array of air cells, preferably all flow resistors, are asymmetric flow resistors in terms of flow direction in the sense that the flow resistance generated in the flow direction from the access port during inflation of air cells is higher than the flow resistance generated in reverse flow direction to the access port during deflation of air cells. Preferably the flow resistors are configured to be asymmetric in the sense that the flow resistance generated during inflation is at least twice as high than the flow resistance generated during deflation flow.

The advantage of asymmetric flow resistors is that during inflation a significant flow resistance between the cells is generated such that there is a noticeable time offset between inflation of subsequent cells. During inflation the air cells expand in height direction perpendicular to the surface of the seat component. If there is a significant time offset between adjacent cells reaching the inflated state the increasing height slowly propagates like a wavefront along the seat component. Once the array of air cells is fully inflated deflation is started by the pneumatically controlled valve wherein, when the flow resistance for deflation flow of air out of the air cells is significantly lower, the time offset between adjacent cells reaching the deflated state is much smaller compared to inflation so that a person seated in the vehicle seat first feels massage movement by the warfront of the expanding height of air cells propagating along the array and thereafter experiences the return to the deflated state as almost simultaneous for all air cells in the array.

In a preferred embodiment the system further comprises a pump controller which is arranged to start operation of the pump and to stop operation of the pump either after a predetermined inflation period, or to stop operation of the pump if the pump controller has determined that the inflation of the array of air cells has been completed, wherein this is determined by the pump controller either based on detecting a rapid increase in the current supply to the pump, or based on the pressure in the feedback line reaching a predetermined end pressure, and to start operation of the pump again after a predetermined intermediate period between deflation and start of the next inflation.

In a preferred embodiment it is determined that the pressure in the feedback line reached the predetermined end pressure by utilizing a pressure switch in fluid communication with the feedback line which sends an output signal to the pump controller when the pressure reaches the end pressure which causes the pump controller to stop operation of the pump. Alternatively a pressure sensor in fluid communication with the feedback line can be used and the sensor signal be monitored by the pump controller to stop the pump once the sensed pressure reaches the predetermined end pressure. The predetermined end pressure can be equal to the pressure threshold of the pneumatically controlled valve which triggers start of deflation.

In a preferred embodiment at least some of the flow resistors are provided by a flow resistor integrated into the interior of an air cell.

In a preferred embodiment a flow resistor is integrated in the associated air cell by incorporating a valve membrane in the interior of a first compartment of the air cell, which valve membrane is arranged to be urged by inflation flow into a first compartment of the air cell against a first compartment wall portion having an opening through which inflation flow is flowing into a further compartment of the air cell, wherein the valve membrane has perforations in the area facing the opening to restrict the flow through the opening by the perforations, whereas the valve membrane is adapted to be lifted off the first compartment wall portion by oppositely directed deflation air flow to thereby allow air to flow out of the opening and through an intermediate space between the first compartment wall portion and the lifted off valve membrane to an outer edge of the valve membrane where one or more open edge sections between the first compartment wall portion and the valve membrane allow air flow to flow out and bypass the perforations of the valve membrane.

The invention will in the following be described in connection with embodiments illustrated in the drawings in which:
Fig. 1 shows a block diagram of a vehicle seat massage system according to the present invention;
Fig. 2 shows a block diagram of alternative embodiments of the vehicle seat massage system with various air cell array patterns;
Fig. 3 shows an air cell array together with a graph showing an inflation and deflation cycle of the array together with a graph showing the height of the air cells as a function of time during inflation and deflation;
Fig. 4 shows the same air cell array as Fig. 3 together with a graph showing a number of inflation and deflation cycles showing the pressure in the air cells as a function of time during inflation and deflation;
Fig. 5 shows the same air cell array as Figs. 3 and 4 together with a graph showing a number of inflation and deflation cycles indicating the flow into the air cells as a function of time during the inflations and deflations;
Fig. 6 shows an exploded view of the air cell array of Figs. 3 to 5;
Fig. 7 shows an exploded view of an individual air cell;
Fig. 8a) to h) show an air cell with integrated flow resistor in a sequence of states during inflation and deflation;
Fig. 9a) to f) show a connector with an integrated flow resistor in a sequence of states during inflation and deflation, which connector may be part of a connection line connected to an air cell;
Fig. 10a) to d) show a block diagram of a vehicle seat massage system and of a pneumatically controlled valve in cross-section in a sequence of states during inflation and deflation; and
Fig. 11 shows a cross-sectional view of the pneumatically controlled valve of Fig. 10.

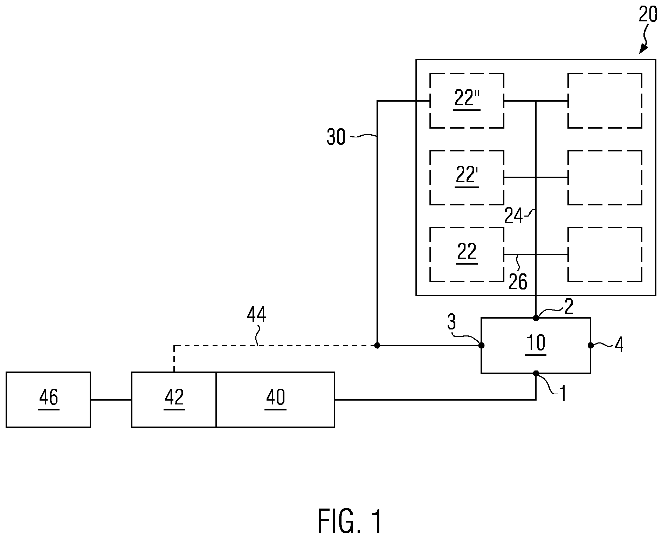

Fig. 1 shows an overview of a vehicle seat massage system in form of a schematic block diagram. The massage system comprises an air cell array 20 including six air cells 22, 22', 22''. The air cells 22, 22', 22" are arranged in two linear series of three air cells 22, 22', 22" in parallel columns. The air cell array 20 further comprises a main conduit 24 from which flow connections 26 branch off, each flow connection 26 being connected to an associated air cell.

The terminal end of the main conduit 24 forms an access port of the air cell array, which access port is connected to an array port 2 of a pneumatically controlled valve 10. The pneumatically controlled valve 10 has, besides its array port 2, a pump port 1 which is connected by a conduit to a pump 40. The pneumatically operated valve 10 further has a control port 3 and a venting port 4 which is communicating with the environmental atmosphere.

The control port 3 of the pneumatically controlled valve 10 is connected to a feedback line 30. The feedback line 30 is, with its end opposite to the end connected to the control port 3, connected to a pneumatic end region of the air cell array 20, in this case to a last (third) air cell 22" in one of the two linear series of air cells 22, 22', 22".

The massage system further comprises a pump controller 42, and an electric power supply 46 for the pump 40 and the pump control 42.

The air cell array 20 further comprises flow resistors (not shown). The flow resistors generate a flow resistance during inflation to achieve a desired pneumatic dynamical behaviour of the air cell array; in particular, the flow resistors increase the time offset between each pair of subsequent air cells in the series, namely 22 - 22' and 22' - 22'', reaching an inflated state. The two air cells 22 in the first row of the two columns first reach their inflated state, whereafter air cell 22' follows with a time offset to reach the inflated state, and finally air cell 22' reaches its inflated state. The air cells in the parallel column of air cells are inflated simultaneously with the air cells 22, 22', 22''. In this manner the state of inflation propagates along the two columns like a wavefront through the air cell array 20 until the air cells 22" in the pneumatic end region of the air cell array 20 reach their inflated state, and thus a pressure increase to the threshold level.

This pressure increase in the last air cell 22" is returned by the feedback line 30 to the control port 3 of the pneumatically controlled valve 10. The pneumatically controlled valve 10 is configured such that it switches from an inflation state to a deflation state when the pressure at the control port 3 exceeds a threshold pressure. In the inflation state the pneumatically controlled valve 10 permits pressurized air from the pump 40 to enter through the pump port 1 and to flow out of through the array port 2 connected to the access port of the air cell array 20. In the deflation state the pneumatically controlled valve 10 permits air flow from the array port 2 to the venting port 4 such that during deflation air flow from the air cells is flowing through the array port 2 and further through the venting port 4 to be vented off to the atmosphere. The flow resistors can for example be of the type as described in above-mentioned WO 2015/039701 A1, namely conduit portions with significantly reduced inner diameter to generate a desired pressure drop. However, it is preferred to utilize asymmetric flow resistors as will be described in more detail further below.

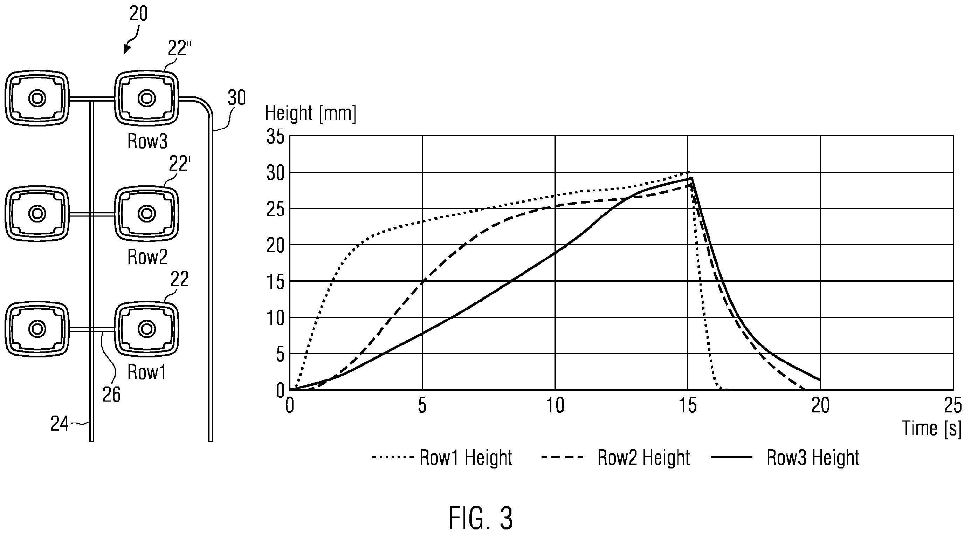

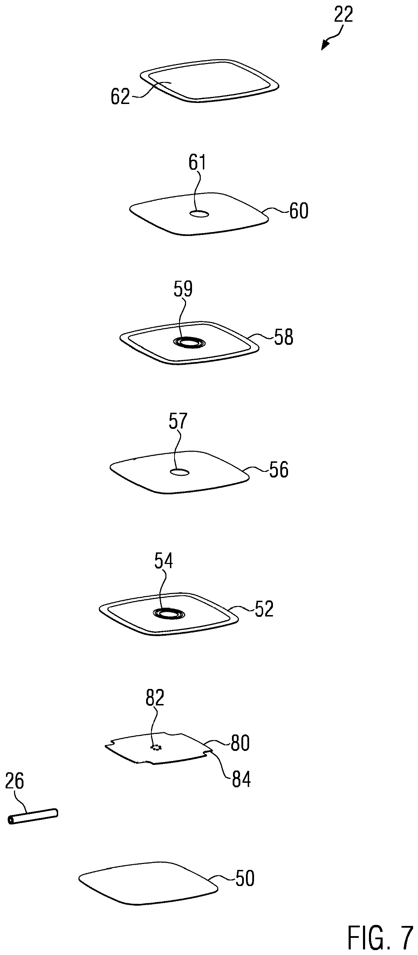

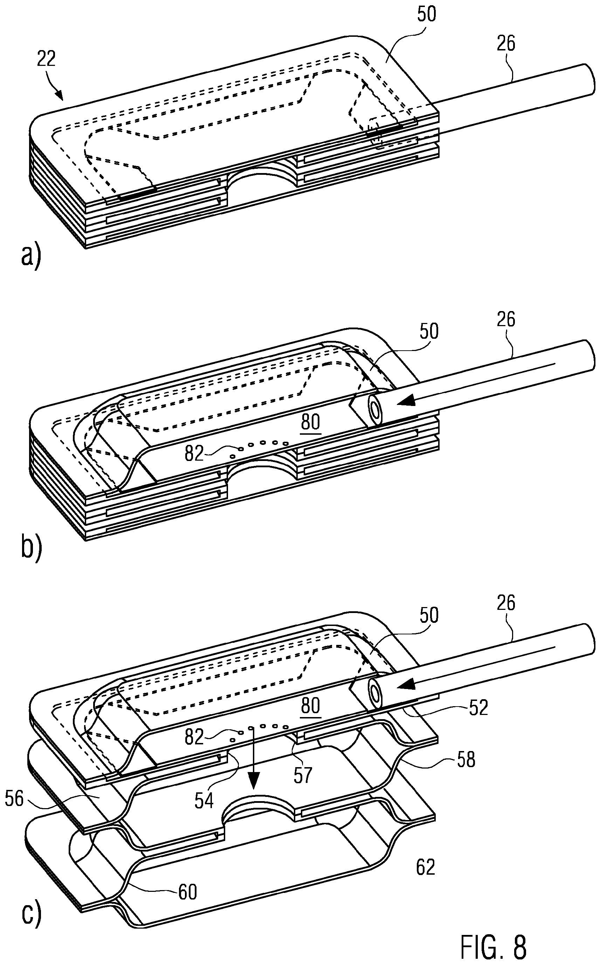

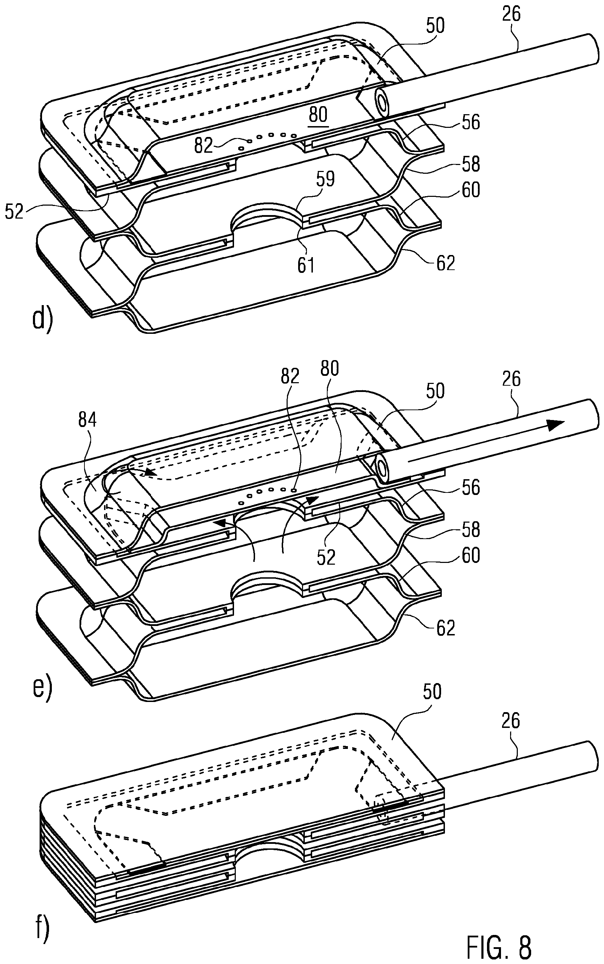

The operation of the air cell array 20 will now be described with reference to Figs. 3 to 5. Fig. 3 shows on the left hand side a schematic view of the air cell array 20. The air cells of this embodiment are bellows having three bellows or inflatable chambers on top of each other which are communicating via a central opening. An exemplary design of such bellows as inflatable air cells will be described further below in connection with Figs. 7 and 8. Such bellows as air cells undergo a significant height increase during inflation, in the example of Fig. 3 a height increase leading to an inflated height slightly below 30 mm.

The graph of Fig. 3 shows the inflation process of the air cell array 20 as height of the air cells undergoing inflation as a function of time. When pressurized air is supplied by the pump to the access port of the main conduit 24 the two air cells 22 in row 1 first start to inflate as shows their rapid increase within about the first three seconds, whereafter a slower height increase phase follows up to 15 seconds (inflation cycle time) to a maximum height of 30 mm. The two air cells 22' in row 2 start to inflate with the time offset relative to the air cells 22 of row 1, and have a lower rate of height increase per unit time such that the air cells 22' reach their inflated state of 80% of the maximum height (30 mm) with the time offset of about 3.5 seconds between the air cell 22 of row 1 and the air cell 22' of row 2. The air cells 22" of row 3 start to be inflated with an even lower rate of height increase per unit time (i.e. with a lower slope in Fig. 3) and reach their inflated state with a further time offset of about 3.5 seconds compared to air cells 22' of Row 2.

The entire inflation cycle shown in Fig. 3 extends over about 15 seconds in which a user seated in a seat provided with such an air cell array first experiences a height increase in the lower part of the back (if the air cell array 20 is located under the cover of a backrest of a vehicle seat) which height increase is felt as a pressure acting on the lower part of the back, whereafter the height increase propagates or travels further up the back through row 2 and finally up to row 3 in an upper part of the back. After about 15 seconds the inflation cycle is terminated. This is the case when the pressure in the feedback line 30 communicating with the control port 3 of the pneumatically controlled valve 10 exceeds the threshold value which switches the valve 10 from the inflation state to the deflation state connecting the main conduit 24 to the venting port 4 of the valve 10, and then the pump is turned off. Deflation takes place more rapidly than inflation, as can be seen in Fig. 3, and with a less pronounced difference in the behaviour of the air cells of row 1, row 2 and row 3. This is due to the fact that in the embodiment illustrated in Fig. 3 asymmetric flow resistors have been used which generate a significantly higher flow resistance for flow in inflation flow direction compared to flow in the opposite deflation flow direction. Therefore, deflation of the entire air cell array 20 takes place in a much shorter period of time than inflation.

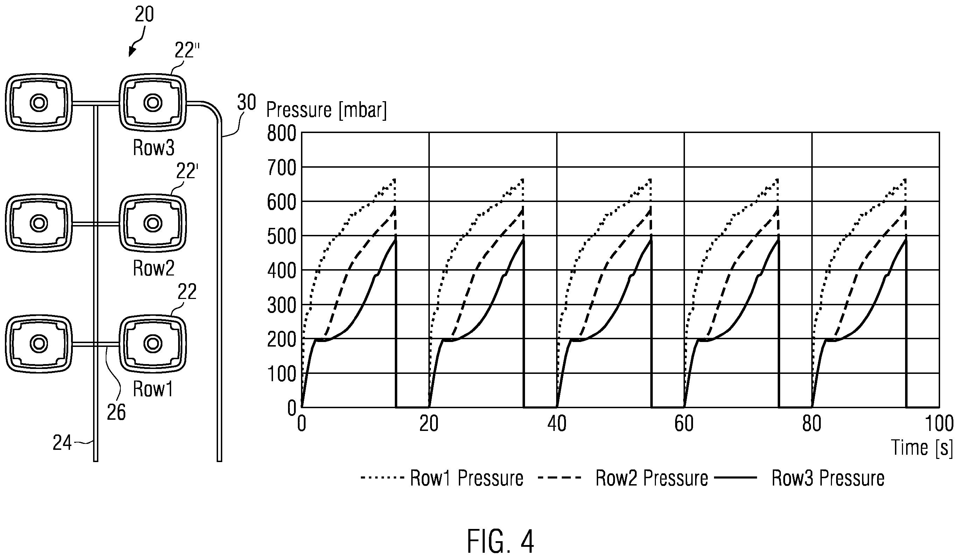

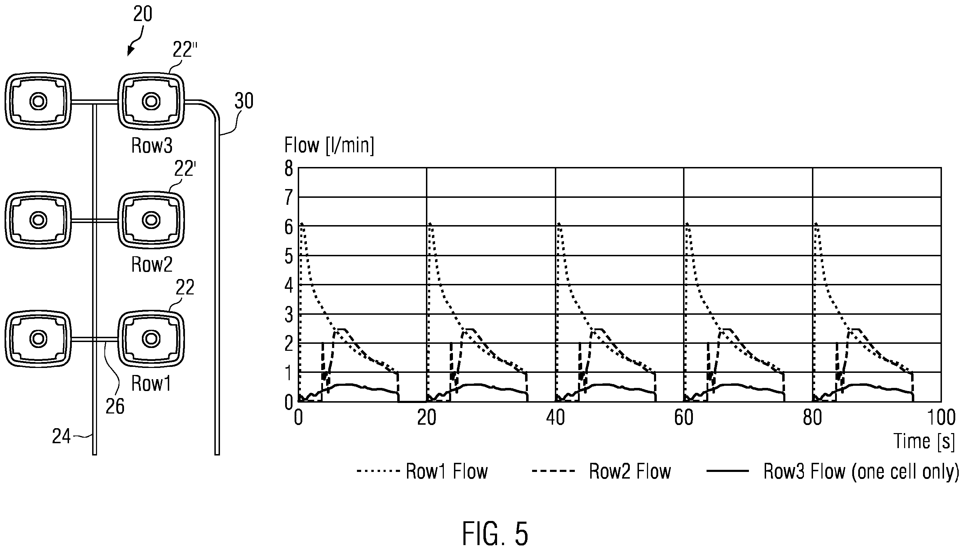

Figs. 4 and 5 show for the same air cell array 20 as in Fig. 3 several inflation/deflation cycles, wherein in Fig. 4 the pressure in the air cells of row 1, row 2 and row 3 is shown as a function of time, and wherein in Fig. 5 the flow to and from the air cells of row 1, row 2 and row 3 is shown as a function of time.

The operation of the pump 40 can be coordinated with the inflation/deflation of the air cell array, as will be explained with reference to Fig. 1. The pump controller 42 starts operation of the pump 40 if the massage system is to be activated. When the pump 40 delivers pressurized air to the pump port 1 of the pneumatically controlled valve 10 the valve is thereby switched to inflation state (as will be described in more detail further below), and the pressurized air is conveyed via the array port 2 through the access port of the air cell array 20 into the main conduit 24. In this manner the air cells 22, 22' and 22" are successively inflated. When the last air cell 22" at the pneumatic end region reaches its inflated state and the pressure reaches a threshold pressure level this causes the pneumatically controlled valve to switch to the deflation state to deflate the air cell array 20 when pressure supply from the pump 40 has been terminated. For the deflation cycle operation of the pump 40 should be stopped. This can be achieved in different manners. One way is to provide a pressure sensor in communication with the feedback line 30, which pressure sensor is connected by connection 44 to the pump controller 42. The pump controller is arranged to monitor the sensor signal of the pressure sensor and to turn off the pump 40 as soon as the pressure sensor delivers a sensor signal indicating that the pressure in the feedback line reached threshold pressure. As an alternative to a pressure sensor a pressure switch could be utilized, which pressure switch is calibrated to switch at the threshold pressure and to deliver a corresponding output signal to the pump controller 42 via line 44, whereafter the pump controller 42 terminates operation of the pump 40.

As an alternative to turn off the pump based on the pressure in the feedback line 30 the pump controller 22 can be arranged to sense the current supplied to the pump; in particular the pump controller can be arranged to detect a current increase in the current supply to turn off the pump in response thereto. The detected current increase is the result of the valve being switched to the deflation state which significantly reduces the back pressure for the pump compared to the previous inflation phase, the reduced back pressure causing an increased pump flow and an increased pump speed.

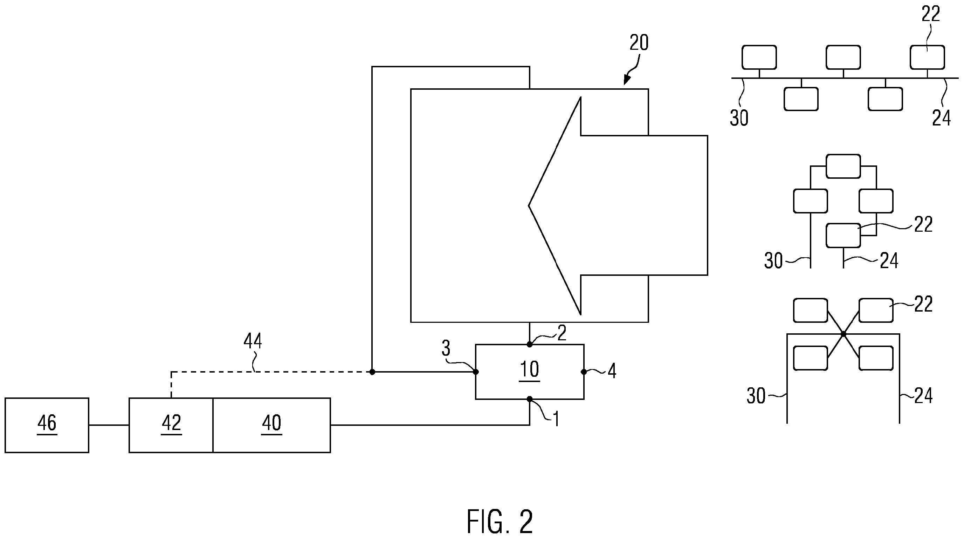

Fig. 2 shows a schematic block diagram corresponding to the block diagram in Fig. 1 but illustrating various air cell patterns in the air cells array 20 which could utilized in the air cell array 20. On the right hand side of Fig. 2 three air cell connection patterns are shown which can be used or may be part of the air cell array 20. In the upper sketch a linear series of cells 22 is shown which are arranged along a linearly extending main conduit 24. Flow connections branching off the main conduit 24 are connecting the air cells 22 to the main conduit 24. If the linear series of air cells as shown in the upper sketch on the right hand side of Fig. 2 is used in the air cell array 20 of the block diagram of Fig. 2 one end of the main conduit 24 would be communication with the pump port 2 of the valve 10, the main conduit 24 would extend vertically in the view of the block diagram of Fig. 2 and the opposite end of the main conduit 24 would be in communication with the feedback line 30.

The air cell pattern shown in the sketch in the middle on the right hand side of Fig. 2 also show a serial pattern, but in this case the main conduit 24 connects the subsequent air cells 22 in series, i.e. each air cell 22 has an input and an output and the main conduit 24 consists of several conduit portions connecting output and input of subsequent air cells 22 in this "in series" connection of air cells. In addition, the air cells 22 are not arranged as a linear series but as a ring. In the air cell pattern shown in the lowest sketch on the right hand side of Fig. 2 air cells 22 are connected with main conduit 24 in a star arrangement. The end of the main conduit designated by reference numeral 24 is in communication with the pump, and the opposite end of the main conduit is in communication with the feedback line 30. In this configuration of air cells and conduit structure the flow resistors of the two upstream air cells (the two air cells closer to the main conduit 24) have a lower flow resistance as the flow resistors to the two downstream air cells so that the two downstream air cells are inflated with a time offset relative to the two upstream air cells.

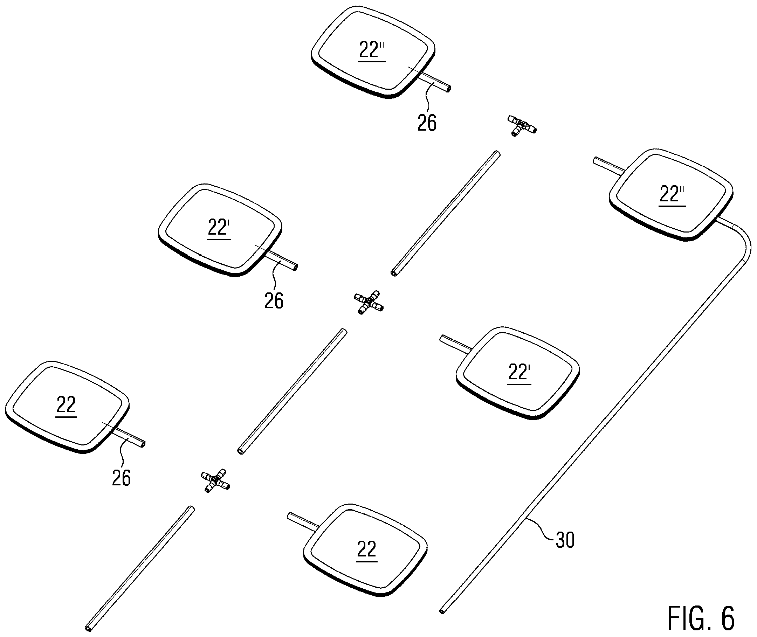

Fig. 6 shows an exploded view of an air cell array 20 as described before, including a central main conduit from which air cell flow connections 26 branch off at three distances along the main conduit 24 to air cells 22, 22' and 22" on opposite sides of the main conduit 24. One of the last air cells 22' in the third row of the two columns of three air cells 22, 22' and 22" has an output to which the feedback line 30 is connected.

A preferred design of an air cell that can be used in connection with the present invention is shown in an exploded view in Fig. 7. As indicated above, a preferred type of air cell used in connection with the present invention is a bellows air cell, in this case comprising three bellows or concertina sections on top of each other as will now be described. As shown in Fig. 7 the air cell bellows comprises several layers of polyurethane film. The first two layers 50, 52 are sealed together at their outer edges. The air flow connection 26 is leading to the interior between the film layers 50, 52, wherein the entry region of flow connection 26 is sealed so that the interior between the first two layers 50, 52 can be inflated. The upper film layer 52 has a central opening 54.

A further pair of film layers 56, 58 forms the second concertina section of the bellows. Again the pair of film layers 56, 58 is sealed together at their outer edges. Film layer 56 comprises a central opening 57 which is aligned with central opening 54 of film layer 52. Film layer 56 is sealed to film layer 52 along a line surrounding the central openings 54 and 57.

Further film layers 60 and 62 form the third concertina section, wherein the further film layer 60, 62 are likewise sealed together round their outer edges and wherein film layer 60 comprises a central opening aligned with the central opening 59 of the film layer 58 underneath it. Film layers 60 and 58 are sealed to each other along a line surrounding the central openings 59, 61.

In this manner a bellows with a first concertina section formed by film layers 50, 52, a second concertina section formed by film layers 56, 58, and a third concertina section formed by film layers 60 and 62 is provided, wherein flow connection 26 is communicating with the interior of the first concertina section formed by film layers 50 and 52. By supplying air flow through the flow connection 26 the three concertina sections on top of each other are inflated, wherein the inflation causes significant increase of height from a state in which the two film layers of a concertina section are in flat state in abutment on each other to an inflated state in which the film layers of each concertina section are urged apart from each other except for their sealed outer edges. Air flow from the flow connection 26 is expanding the first concertina section made of film layers 50 and 52, wherein the flow is communicated from the first concertina section through the central openings 54 and 57 to the second concertina section 56, 58, and further through central opening 61 to third concertina section 60, 62.

The bellows type air cell design described so far is conventional. There are also designs with only two concertina sections on top of each other, or with more than three concertina sections.

Not conventional in the design of the air cell 22 of Fig. 7 is an asymmetric flow resistor integrated into the air cell 22. The flow resistor comprises a valve membrane 80 which may likewise be made of polyurethane film. The valve membrane 80 comprises perforations 82 in a central region thereof, which perforations 82 are aligned with the central opening 54 of the film layer 52 on top of it. The valve membrane 80 is, along major parts of its outer edge, sealed to the film layer 52 on top of it, except for the cut-out corner regions 84 of the valve membrane 80 which are not connected to the film layer 52 and thus form open edge sections.

The function of this arrangement of the valve membrane 80 in the air cell 22 is as follows. In the initial deflated state the film layers of the air cell 22 are, except for the region where the tube of the flow connection 26 is inserted between the film layers 50 and 52, in a flat state with the film layers 50, 52, 56, 58, 60 and 62 on top of each other, wherein the valve membrane 80 is sandwiched between the film layers 50 and 52 and sealed at its outer edge to the film layer 52 except for the cut-out corner regions 84. When pressurized air is supplied through the tube of the flow connection 26 the film layers 50 and 52 start to separate from each other in their central regions. While the flow of air through the tube of flow connection 26 continues the valve membrane 80 is pressed against the film layer 52 on top of it such that pressurized air that can leave the interior space of the first concertina section between the film layers 50 and 52 only through the perforation 82 of the valve membrane 80 and further through the central opening 54 of the film layer 52 to the next concertina section. Due to the restricted openings of the perforations 82 the valve membrane 80 in this manner generates a high flow resistance upon inflation of the air cell 22.

The function of the valve membrane is different during deflation as will first be explained with reference to Fig. 7 and later on with reference to Fig. 8. During deflation pressurized air from the upper air chambers (concertina sections) of the air cell 22 is flowing towards the lowest concertina section between film layers 50 and 52 to flow into this lowest concertina section through central opening 54 of film layer 52. Due to this air flow through opening 54 towards the tube of the flow connection 26 a central portion of the valve membrane 80 is bulged away from the film layer 52. In this state air can also flow through opening 54 and into a gap between the film layer 52 and the valve membrane 80 and can flow towards the corner sections 84 of the valve membrane 80 where the valve membrane is not sealed to the film layer 52. Therefore, air can flow through opening 54 and through the open corner sections 84 into the interior of the first concertina section and be vented off through the tube of flow connection 26, thereby circumventing or bypassing the perforations 82 of the valve membrane. Since the flow resistance for flowing through the open corner section 84 is significantly lower than the flow resistance for flow through the perforations 82 of the valve membrane 80 the flow resistor established by the valve membrane 80 in this manner is an asymmetric flow resistor generating a high flow resistance for the flow direction during inflation, and a low flow resistance for the flow direction during deflation of the air cell.

The described function and design of the air cell with its integrated flow resistor is further illustrated in the perspective cross-sectional views of Fig. 8a) to h) showing a sequence of states during inflation and deflation of the air cell 22. Fig. 8a) shows the air cell 22 in the completely deflated state, wherein it should be noted that the air cell is turned upside down compared to the illustration of Fig. 7, i.e. in the view of Fig. 8a) the film layer 50 is illustrated as upper film layer.

In Fig. 8b) inflation has started and air is flowing into the first concertina section between film layers 50 and 52, wherein due to the flow direction during inflation the valve membrane 80 is pressed onto the film layer 52 (see Fig. 8c)). For this reason air can leave the first concertina section between film layers 50 and 52 through openings 54, 57 only through the perforations 82 of the valve membrane 80 as indicated by the arrow in Fig. 8c). For this reason a high flow resistance is generated by the valve membrane 80 during inflation of the air cell 22. In the state of Fig. 8c) the second concertina section between the film layers 56 and 58, and the third concertina section between the film layers 60 and 62 have already been inflated. This inflated state is also shown in Fig. 8d) in which inflation air flow has been stopped.

In Fig. 8e) deflation has already started and air is flowing out of the tube of flow connection 26 as indicated by the arrow. Air from the concertina sections between film layers 56 and 58 and between film layers 60 and 62 is pressing onto the valve membrane 80 and is urging it in its central portion away from film layer 52. This opens a flow space between the film layer 52 and the membrane 80 where air can now flow to the open corner sections 84 of the valve membrane and thereby enter the interior of the first concertina section to flow towards and out of the tube of the flow connection 26. In this manner the out flowing air flow during deflation can bypass the perforations 82 and flow through the larger open corner sections 84 of the valve membrane which are not sealed to the film layer 52. In this manner the asymmetric flow resistor formed by the cooperation of the valve membrane 80 with the film layer 52 generates a high flow resistance through the perforations 82 during inflation flow, and a low flow resistance during deflation flow as shown in Fig. 8e).

After all air left the air cell 22 eventually, the deflated state show in Fig. 8 f) is reached wherein all film layers are in a flat configuration on top of each other again (except for the region where the tube of the flow connection 26 enters the interior between film layers 50 and 52).

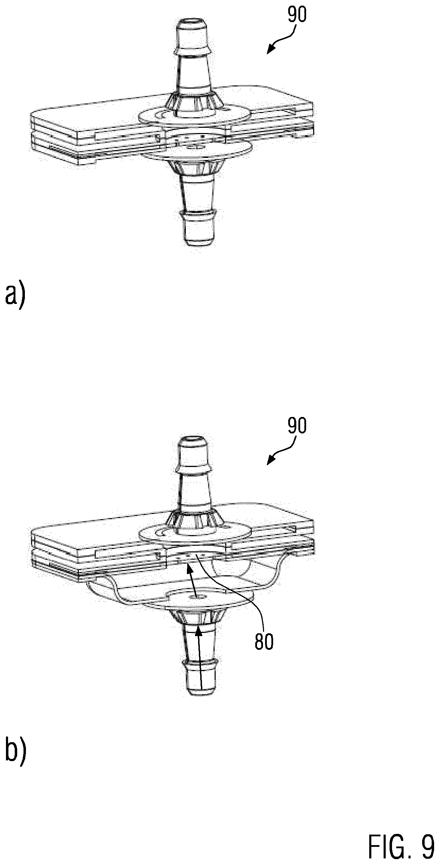

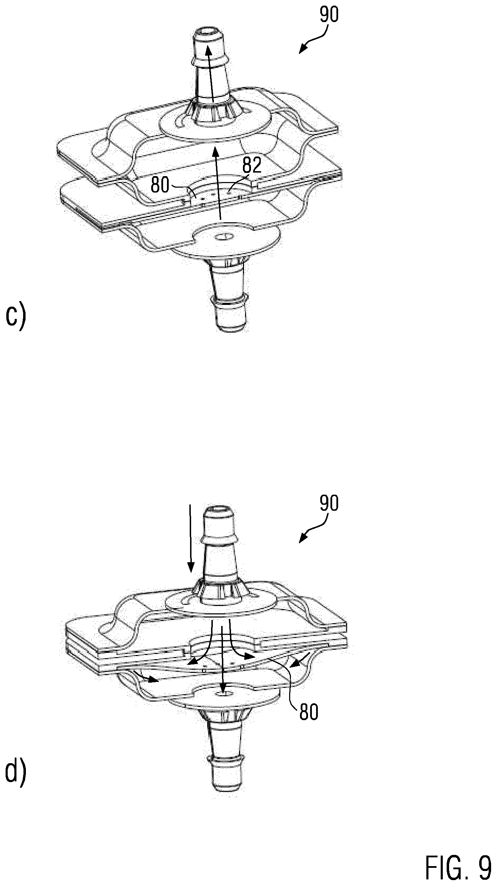

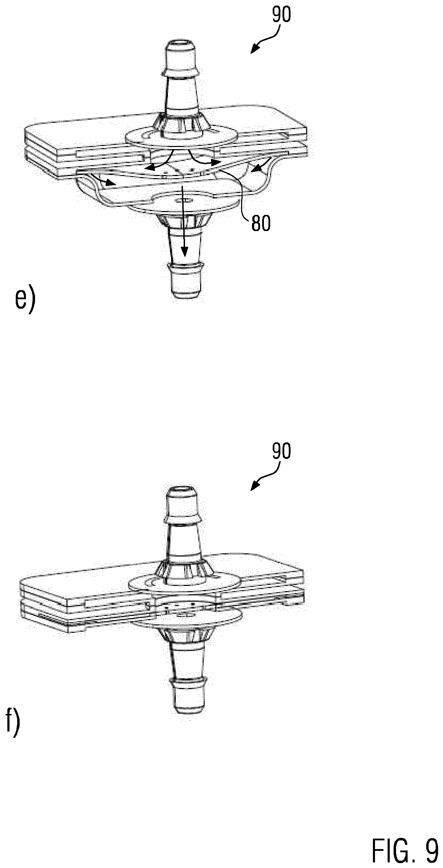

Fig. 9 shows a similar sequence of states of a connector including an asymmetric flow resistor working according to the same principle, which connector can be incorporated in the conduits or flow connections between air cells if, in contrast to the above described embodiment, the flow resistor is not integrated into an air cell. The flow connector 90 also has concertina sections and a valve membrane 80 with perforations 82 (see Fig. 9b) and c)). Air flows during inflation in the direction indicated by the arrows in Figs. 9b) and c). Again, the valve membrane is pressed by this air flow against the adjacent layer so that the air has to pass the small opening area of the perforations 82 which generates a high flow resistance in the flow direction of inflation shown in Figs. 9b) and c).

For flow in the opposite deflation direction shown in Fig. 9d) the valve membrane 80 is in its central area again urged away from the adjacent layer so that air can flow in between the adjacent layer and the valve membrane 80 to the corner regions, where the valve membrane is not sealed to the adjacent layer, and can flow out through the open corner sections as described before in connection with Fig. 8, thereby bypassing the perforations 82.

In Fig. 9 e) the upper concertina section of the connector 90 is already almost deflated and the remaining small amount of air is leaving, whereafter also the lower concertina section continues to be deflated to finally reach the deflated state of the flow connector 90 shown in Fig. 9f).

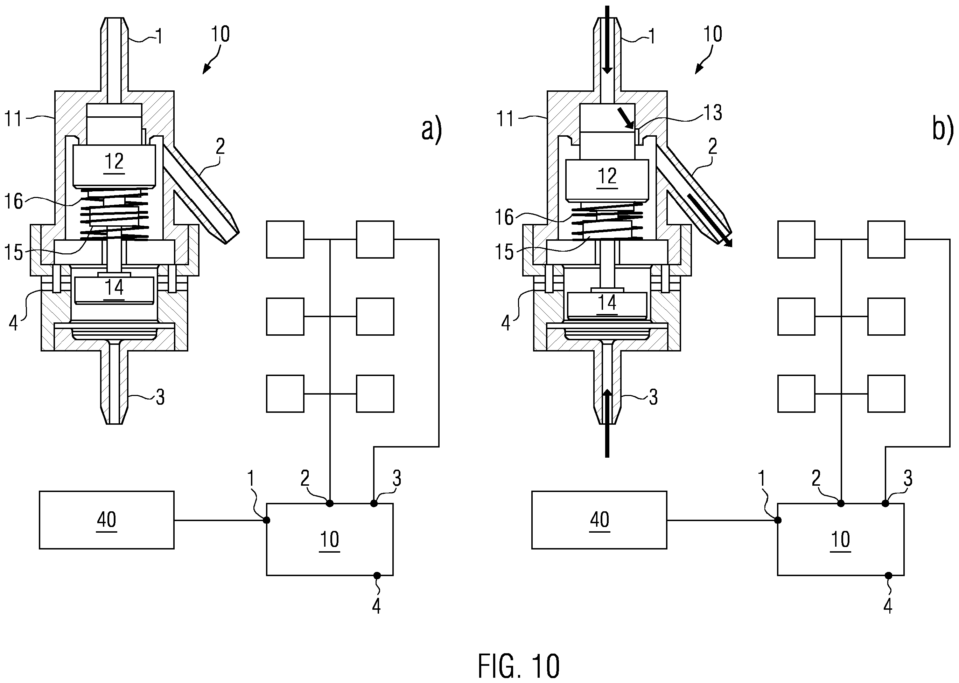

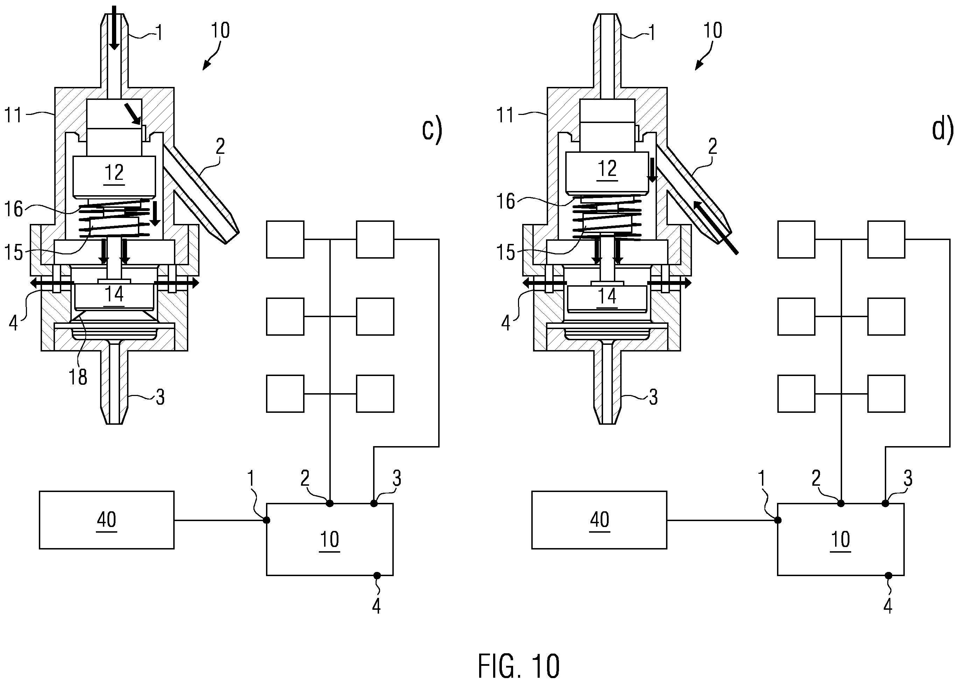

In the following the operation of the pneumatically controlled valve during an inflation and deflation cycle will be described in connection with Figs. 10 a) to d) showing a block diagram of a massage system and a cross-sectional view of the pneumatically controlled valve 10 in a sequence of states during the cycle. Valve 10 comprises a valve housing 11. The pump port 1 and the control port 3 are located at opposite end faces of the housing 11. In the valve housing 11 a valve chamber is defined, and the array port 2 and the venting port communicate with the valve chamber and are both located on a sidewall of the valve housing between the end faces. In the valve chamber a piston 12 is slidable mounted in longitudinal direction defined by the opposing pump and control ports 1, 3. The piston 12 consists of several sections of different diameters including an intermediate stem carrying a release button 14 at its lower end. A spring 16 is supported by an internal wall member within the valve chamber, which wall member has a central opening through which the stem of the piston extends and which establishes a flow connection paths between the valve chamber regions above and below the wall member. The opposite end of the spring 16 is in abutment on an upper portion of the piston 12 and exerts a bias force in the direction towards the pump port 1.

Close to the end of the valve chamber next to the controlled port 3 a membrane 18 seals of the valve chamber and separates the valve chamber from and internal space formed in the housing part of the control port 3.

Fig. 10 a) illustrates the state before start of an inflation cycle. The spring 16 urges the piston 12 against a shoulder formed in the valve chamber so that the pump port 1 is not in flow communication with the array port 2; in this state there is an open flow path out of the air cell array through the array port 2, the valve chamber, the central opening of the wall member and to the venting port 4 so that in principle deflation could take place.

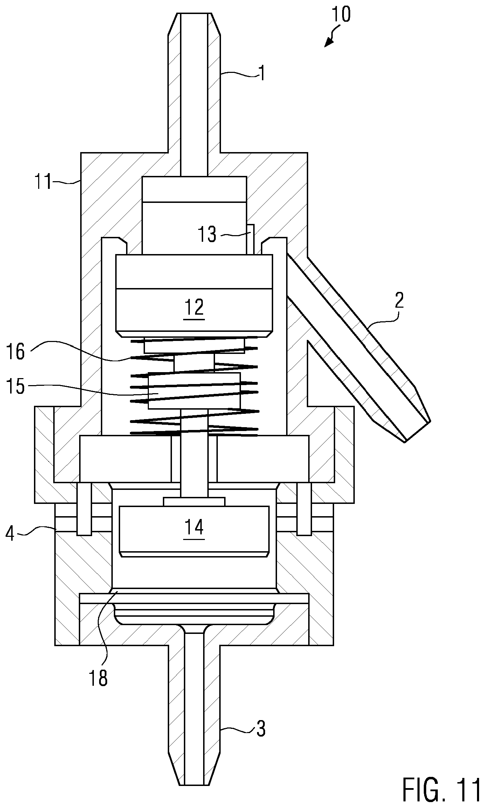

In Fig. 10 b) the pump has started to deliver pressurized air through the pump port 1 as indicated by the arrow in Fig. 10 b). As a result the piston 12 is displaced in longitudinal direction against the bias force of the spring 16 and away from the pump port 1. This displacement moves the upper tip of the piston 12 past a bypass channel 13 (see Fig. 11) in an inner wall of the valve chamber, thereby establishing flow communication between the pump port 1 and the valve chamber as indicated by the arrows in Fig. 10 b). From the valve chamber the pump flow is flowing through the array port 2 to inflate the air cell array. In this displaced state of the piston 12 a seal member 15 is in abutment on the inner wall member in the wall chamber and seals off its central opening so that there is no communication between the upper part of the valve chamber (through which pump air flow flows to array port 2) and the venting port 4. With increasing pressure in the pneumatic end region of the air cell array this pressure acts through the feedback line at the control port 3 as indicated by the arrow in Fig. 10 b).

When the pressure at the control port 3 exceeds the threshold pressure the membrane 18 in the housing part of the control port 3 is bulged inwardly and comes into abutment on the lower end face of the release button 14, thereby displacing the piston 12 in longitudinal direction towards the pump port 1, as shown in Fig. 10 c). In the situation of Fig. 10 c) the pump is still supplying air flow to pump port 1. This air flow flows through the valve chamber and out of the venting port 4; this pump pressure in the valve chamber is still also present at the array port 2 such that in the state of Fig. 10c) in which the pump still operating deflation of the air cell array has not yet started to a significant extent.

In the state of Fig. 10 d) the pump controller has turned off pump 40. In the absence of pump pressure air flow from the air cell array is now flowing through the array port 2, the valve chamber and out of the venting ports 4.

## Claims

1. Vehicle seat massage system comprising:
a pump (40) for providing pressurized air;
an array (20) of distributed inflatable air cells (22, 22', 22") equipped with an air conduit structure which has an access port connected to receive air flow from the pump and which has for each air cell of the array a flow connection (26) for air flow to and from the air cell;
a plurality of flow resistors (50, 82) arranged in the array of air cells such that the flow resistance to the air cells is increasing starting from the access port with increasing distance from the access port, and that height expansion of air cells due to inflation is propagating in a direction from the access port through the array and at last reaching a pneumatic end region of the array with a time delay;
a valve (10) arranged between the pump (40) and the access port of the array, wherein the valve (10) is configured to be switchable between an inflation state and a deflation state, wherein the valve is arranged to permit, in the inflation state, air flow from the pump to enter the access port of the array, and to permit, in the deflation state, air to flow from the air cells out of the access port of the array to be vented off; and
means for controlling the valve to switch between inflation state and deflation state;
**characterized in that** the means for controlling the valve include a pneumatic or mechanic feedback transmission (30) connecting the pneumatic end region of the array with the valve (10), wherein the feedback transmission and the valve are arranged such that the valve is switched from the inflation state to the deflation state when the pressure at the pneumatic end region exceeds a threshold level.

2. Vehicle seat massage system according to claim 1, **characterized in that** the valve is configured to be a pneumatically controlled valve (10) having a control input port (3) and that the feedback transmission comprises a pneumatic feedback line (30) in communication with the pneumatic end region of the array (20) and connected to the control port (3) of the pneumatically controlled valve (10), wherein the valve is arranged to switch from the inflation state to the deflation state when the pressure at the control port exceeds a switch level corresponding to the pressure at the pneumatic end region of the array exceeding the threshold level.

3. Vehicle seat massage system according to claim 2, **characterized in that** the pneumatically controlled valve (10) comprises a valve housing (11) having, besides the control port (3), a pump port (1) in communication with the pump (40), an array port (2) connected to the access port, and a venting port (4) communicating with the environmental atmosphere, and that a piston (12) as a valve element in the interior of the valve housing (11) is biased by a spring (16) to a position corresponding to the deflation state of the valve when no input pressure from the pump (40) is applied to the pump port, and that the valve is configured such that, when input pressure from the pump (40) is present at the pump port, the piston (12) is displaced against the bias of the spring (16) to a position corresponding to the inflation state of the valve until the pressure at the control port (3) reaches the threshold pressure which causes the piston to be displaced to the position corresponding to the deflation state of the valve.

4. Vehicle seat massage system according to claim 3, **characterized in that** the valve housing (11) defines a valve chamber in its interior in which the piston is housed to be slidable in longitudinal direction, that the pump port (1) and the control port (3) are located at opposite end faces of the valve housing (11) such that pressure in the pump port (1) exerts a force on the piston (12) in a first direction and pressure in the control port (3) causes a force on the piston opposite to the first direction, and that the array port (2) and the venting port (4) are located in a sidewall of the valve housing, wherein the spring (16) exerts a bias force in longitudinal direction on the piston (12) urging it to the position corresponding to the deflation state, wherein, when pump pressure is applied to the pump port (1), the piston (12) is thereby displaced against the spring bias, thereby opening a bypass channel (13) in an inner wall of the valve chamber permitting air flow from the pump port (1) to the array port (2) to establish the inflation state of the valve, and wherein an elastic membrane (18) closes an interior space of the valve housing part next to the control port (3) such that pressure at the control port (3) causes the membrane (18) to be bulged inwardly and to abut on a release button (14) of the piston (12) to displace the piston (12) towards the position corresponding to the deflation state of the valve.

5. Vehicle seat massage system according to any of the preceding claims, **characterized in that** the array (20) of air cells comprises at least one series of subsequent air cells (22, 22', 22"), that the flow resistors are arranged such that the flow resistance is increasing starting from a first air cell (22) of the series which is next to the access port of the array and is increasing along that series of air cells air cell by air cell to a last air cell in the series of air cells such that the air cells are inflated in sequence with a time offset between each pair of subsequent air cells (22, 22', 22") reaching the inflated state.

6. Vehicle seat massage system according to claim 5, **characterized in that** the array (20) of air cells (22, 22', 22") comprises a main conduit (24) extending from the access port of the array, and a plurality of air cells (22, 22', 22") arranged along the main conduit (24), each air cell communicating via a flow connection (26) with the main conduit (24), wherein the air cells (22, 22', 22'') and the respective flow connections (26) to the main conduit are distributed at different distances along the main conduit (24) from the access port, thereby forming one or two series of air cells (22, 22', 22") along the main conduit (24).

7. Vehicle seat massage system according to claim 5, **characterized in that** the main conduit (24) of the array is extending along a straight line and that air cells (22, 22', 22'') are connected to the main conduit to form a linear series of air cells.

8. Vehicle seat massage system according to any of claims 6 or 7, **characterized in that** the feedback line (30) communicates with the last air cell (22'') along the main conduit which is, in terms of length of the flow path from the access port to the respective air cell, furthest away from the access port.

9. Vehicle seat massage system according to any the claims 5 to 8, **characterized in that** the flow resistors are dimensioned such that the time offset between an air cell reaching its inflated state and the next subsequent air cell in the series of air cells reaching their inflated states is above 0.5 s, preferably above 1 s.

10. Vehicle seat massage system according to any of the preceding claims, **characterized in that** at least some of the flow resistors (52, 80) of the array (20) of air cells are asymmetric flow resistors in terms of flow direction **in that** the flow resistance generated in the flow direction from the access port during inflation of air cells is higher than the flow resistance generated in reverse flow direction to the access port during deflation flow.

11. Vehicle seat massage system according to claim 10, **characterized in that** the asymmetric flow resistors (52, 80) are configured such that the flow resistance generated during inflation flow is at least twice as high than the flow resistance generated during deflation flow.

12. Vehicle seat massage system according to any of the preceding claims, **characterized in that** the system further comprises a pump controller (42) which is arranged to start operation of the pump (40) and to stop operation of the pump after predetermined inflation period or if the pump controller (42) has determined that the inflation of the array of air cells has been completed either based on detecting a rapid increase in the current supply to the pump (40) or based on the pressure in the feedback line (30) reaching an inflation end pressure, and to start operation of the pump after a predetermined intermediate period.

13. Vehicle seat massage system according to claim 12, **characterized in that** system comprises either a pressure switch in flow communication with the feedback line (30) which is actuated when the pressure in the feedback line (30) reaches the inflation end pressure to signal the pump controller (42) to stop the pump (40), or a pressure sensor in flow communication with the feedback line (30), the signals of which pressure sensor being monitored by the pump controller (42) to stop the pump (40) once the sensed pressure reaches the inflation end pressure.

14. Vehicle seat massage system according to any of the preceding claims, **characterized in that** at least some of the flow resistors (52, 80) are integrated into the interior of air cells.

15. Vehicle seat massage system according to claim 14, **characterized in that** a flow resistor (52, 80) is integrated in the associated air cell by incorporating a valve membrane (80) in an inflatable entry compartment of the air cell, which valve membrane (80) is arranged to be urged by inflation flow into the entry compartment and against an entry compartment wall portion (52) having an opening (54) through which inflation flow is flowing into a further compartment of the air cell, wherein the valve membrane has perforations (82) in the area facing the opening (54) to restrict the flow through the opening (54) by the perforations (82), whereas the valve membrane (80) is arranged to be lifted off the entry compartment wall portion (52) by deflation flow through the opening (54) to thereby allow air to flow out of the opening (54) and into an intermediate space between the lifted off valve membrane (80) and the entry compartment wall portion (52) and to an outer edge of the valve membrane where one or more open edge sections (84) allow air to bypass the perforations (82) of the valve membrane (80), to thereby provide asymmetric flow restriction with a higher flow resistance during inflation compared to deflation.

## Patentansprüche

1. Fahrzeugsitz-Massagesystem mit:
einer Pumpe (40) zur Lieferung von Druckluft,
einem Feld (20) von verteilten aufblasbaren Luftzellen (22, 22', 22''), das mit einer Luftleitungsstruktur versehen ist, die einen Zugangsanschluss hat, der zum Aufnehmen des Luftstroms von der Pumpe angeschlossen ist, und die für jede Luftzelle des Feldes eine Fließverbindung (26) für Luftfluss zu und von der Luftzelle hat,
einer Vielzahl von Fließwiderständen (50, 82), die in dem Feld von Luftzellen so angeordnet sind, dass der Fließwiderstand zu den Luftzellen beginnend an dem Zugangsanschluss mit zunehmendem Abstand von dem Zugangsanschluss ansteigt und dass sich die Höhenexpansion der Luftzellen aufgrund des Aufblasens in Richtung von dem Zugangsanschluss durch das Feld fortpflanzt und zuletzt eine pneumatische Endregion des Feldes mit einer Zeitverzögerung erreicht,
einem Ventil, das zwischen der Pumpe (40) und dem Zugangsanschluss des Feldes angeordnet ist, wobei das Ventil (10) dazu ausgestaltet ist, um zwischen einem Aufblaszustand und einem Entlüftungszustand umschaltbar zu sein, wobei das Ventil dazu ausgestaltet ist, um im Aufblaszustand Luftfluss von der Pumpe in den Zugangsanschluss des Feldes eintreten zu lassen, und um im Entlüftungszustand Luftfluss von den Luftzellen aus dem Zugangsanschluss des Feldes zur Entlüftung fließen zu lassen, und
einer Einrichtung zum Steuern des Ventils, um zwischen Aufblaszustand und Entlüftungszustand umzuschalten,
**dadurch gekennzeichnet, dass** die Einrichtung zur Steuerung des Ventils eine pneumatische oder mechanische Rückkopplungsübertragung (30) aufweist, die die pneumatisehe Endregion des Feldes mit dem Ventil (10) verbindet, wobei die Rückkopplungsübertragung und das Ventil dazu ausgestaltet sind, so dass das Ventil von dem Aufblaszustand in den Entlüftungszustand umgeschaltet wird, wenn der Druck in der pneumatischen Endregion ein Schwellenniveau überschreitet.

2. Fahrzeugsitz-Massagesystem nach Anspruch 1, **dadurch gekennzeichnet, dass** das Ventil als pneumatisch gesteuertes Ventil (10) ausgestaltet ist, das einen Steuereingangsanschluss (3) hat, und dass die Rückkopplungsübertragung eine pneumatische Rückkopplungsleitung (30) aufweist, die mit der pneumatischen Endregion des Feldes (20) kommuniziert und mit dem Steueranschluss (3) des pneumatisch gesteuerten Ventils (10) verbunden ist, wobei das Ventil dazu ausgestaltet ist, um aus dem Aufblaszustand in den Entlüftungszustand umzuschalten, wenn der Druck an dem Steueranschluss ein Schaltniveau überschreitet, was dem Anstieg des Druckes in der pneumatischen Endregion des Feldes über das Schwellenniveau entspricht.

3. Fahrzeugsitz-Massagesystem nach Anspruch 2, **dadurch gekennzeichnet, dass** das pneumatisch gesteuerte Ventil (10) ein Ventilgehäuse (11) hat, das neben dem Steueranschluss (3) einen Pumpenanschluss (1) in Kommunikation mit der Pumpe, einen Feldanschluss (2), der mit dem Zugangsanschluss verbunden ist, und einen Entlüftungsanschluss (4) hat, der mit der Umgebungsatmosphäre kommuniziert, und dass ein Kolben (12) als Ventilelement im Inneren des Ventilgehäuses (11) durch eine Feder (16) in eine Stellung vorgespannt wird, die dem Entlüftungszustand des Ventils entspricht, wenn kein Eingangsdruck von der Pumpe (40) auf den Pumpenanschluss einwirkt, und dass das Ventil so ausgestaltet ist, dass, wenn Eingangsdruck von der Pumpe (40) am Pumpenanschluss vorhanden ist, der Kolben gegen die Vorspannung der Feder (16) in eine Stellung verschoben wird, die dem Aufblaszustand des Ventils entspricht, bis der Druck an dem Steueranschluss (3) den Schwellendruck erreicht, was bewirkt, dass der Kolben in eine Stellung verschoben wird, die dem Entlüftungszustand des Ventils entspricht.

4. Fahrzeugsitz-Massagesystem nach Anspruch 3, **dadurch gekennzeichnet, dass** das Ventilgehäuse (11) eine Ventilkammer in seinem Inneren definiert, in der der Kolben gleitfähig in Längsrichtung untergebracht ist, dass der Pumpenanschluss (1) und der Steueranschluss (3) an gegenüberliegenden Endflächen des Ventilgehäuses (11) liegen, so dass Druck in dem Pumpenanschluss (1) eine Kraft auf den Kolben (12) in einer ersten Richtung ausübt und Druck im Steueranschluss (3) eine Kraft auf den Kolben entgegengesetzt zu der ersten Richtung bewirkt, und dass der Feldanschluss (2) und der Entlüftungsanschluss (4) in einer Seitenwand des Ventilgehäuses liegen, wobei die Feder (16) eine Vorspannkraft in Längsrichtung auf den Kolben (12) ausübt, die ihn in die Stellung entsprechend dem Entlüftungszustand drückt, wobei, wenn Pumpendruck auf den Pumpenanschluss (1) angewendet wird, der Kolben (12) dadurch gegen die Federvorspannung verschoben wird, wodurch ein Überbrückungskanal (13) in einer Innenwand der Ventilkammer geöffnet wird, was Luftfluss von dem Pumpenanschluss (1) zum Feldanschluss (2) erlaubt, um den Aufblaszustand des Ventils zu realisieren, und wobei eine elastische Membran (18) einen Innenraum des Ventilgehäuseteils benachbart dem Steueranschluss (3) schließt, so dass Druck am Steueranschluss (3) bewirkt, dass die Membran (18) sich nach innen wölbt und gegen einen Freigabeknopf (14) des Kolbens (12) drückt, um den Kolben (12) zu der Stellung hin zu verschieben, die dem Entlüftungszustand des Ventils entspricht.

5. Fahrzeugsitz-Massagesystem nach einem der vorhergehenden Ansprüche, **dadurch gekennzeichnet, dass** das Feld (20) von Luftzellen wenigstens eine Reihe von aufeinanderfolgenden Luftzellen (22, 22', 22'') aufweist, das die Fließwiderstände so angeordnet sind, dass der Fließwiderstand beginnend von einer ersten Luftzelle (22) der Reihe, die dem Zugangsanschluss des Feldes am nächsten ist, ansteigt und entlang dieser Reihe von Luftzellen Luftzelle für Luftzelle bis zu einer letzten Luftzelle in der Reihe von Luftzellen ansteigt, so dass die Luftzellen in Reihenfolge mit einem Zeitversatz zwischen jedem Paar von aufeinanderfolgenden Luftzellen (22, 22', 22'') den aufgeblasenen Zustand erreichen.

6. Fahrzeugsitz-Massagesystem nach Anspruch 5, **dadurch gekennzeichnet, dass** das Feld (20) von Luftzellen (22, 22', 22'') eine Hauptleitung (24), die von dem Zugangsanschluss des Feldes ausgeht, und eine Mehrzahl von Luftzellen (22, 22', 22'') aufweist, die entlang der Hauptleitung (24) angeordnet sind, wobei jede Luftzelle über eine Fließverbindung (26) mit der Hauptleitung (24) kommuniziert, wobei die Luftzellen (22, 22', 22'') und die jeweiligen Fließverbindungen (26) zu der Hauptleitung entlang der Hauptleitung (24) in unterschiedlichen Abständen von dem Zugangsanschluss verteilt sind, wodurch eine oder zwei Reihen (22, 22', 22'') entlang der Hauptleitung (24) gebildet sind.

7. Fahrzeugsitz-Massagesystem nach Anspruch 5, **dadurch gekennzeichnet, dass** die Hauptleitung (24) des Feldes entlang einer geraden Linie verläuft und dass die Luftzellen (22, 22', 22'') mit der Hauptleitung verbunden sind, um eine lineare Reihe von Luftzellen zu bilden.

8. Fahrzeugsitz-Massagesystem nach einem der Ansprüche 6 oder 7, **dadurch gekennzeichnet, dass** die Rückkopplungsleitung (30) mit der letzten Luftzelle (22'') entlang der Hauptleitung kommuniziert, die in Bezug auf die Länge des Fließweges von dem Zugangsanschluss zu der jeweiligen Luftzelle am weitesten von dem Zugangsanschluss entfernt ist.

9. Fahrzeugsitz-Massagesystem nach einem der Ansprüche 5 bis 8, **dadurch gekennzeichnet, dass** die Fließwiderstände so dimensioniert sind, dass der Zeitversatz zwischen dem Erreichen des aufgeblasenen Zustands einer Zelle und dem Erreichen des aufgeblasenen Zustands der nächsten, darauf folgenden Luftzelle in der Reihe über 0,5 s beträgt, vorzugsweise über 1 s.

10. Fahrzeugsitz-Massagesystem nach einem der vorhergehenden Ansprüche, **dadurch gekennzeichnet, dass** wenigstens einige der Fließwiderstände (52, 80) des Feldes (20) der Luftzellen in Bezug auf die Fließrichtung asymmetrische Fließwiderstände sind, so dass der in Fließrichtung von dem Zugangsanschluss während des Aufblasens von Luftzellen erzeugte Fließwiderstand größer als der in umgekehrter Fließrichtung zu dem Zugangsanschluss während des Entlüftungsflusses erzeugte Fließwiderstand ist.

11. Fahrzeugsitz-Massagesystem nach Anspruch 10, **dadurch gekennzeichnet, dass** die asymmetrischen Fließwiderstände (52, 80) so ausgestaltet sind, dass der während des Aufblasflusses erzeugte Fließwiderstand wenigstens zweimal so groß wie der während des Entlüftungsflusses erzeugte Fließwiderstand ist.

12. Fahrzeugsitz-Massagesystem nach einem der vorhergehenden Ansprüche, **dadurch gekennzeichnet, dass** das System eine Pumpensteuereinheit (42) aufweist, die dazu eingerichtet ist, um den Betrieb der Pumpe (40) zu starten und den Betrieb der Pumpe nach einer vorgegebenen Aufblasperiode oder auf die Feststellung der Pumpensteuereinheit (42) hin, dass das Aufblasen des Feldes von Luftzellen abgeschlossen ist, zu beenden, wobei diese Feststellung entweder basiert auf der Erfassung eines schnellen Anstiegs in der Stromzufuhr zu der Pumpe (40) oder darauf basiert, dass der Druck in der Rückkopplungsleitung (30) einen Aufblasenddruck erreicht, und den Betrieb der Pumpe nach einer vorgegebenen Zwischenperiode zu starten.

13. Fahrzeugsitz-Massagesystem nach Anspruch 12, **dadurch gekennzeichnet, dass** das System entweder einen Druckschalter in Fließverbindung mit der Rückkopplungsleitung (30), der betätigt wird, wenn der Druck in der Rückkopplungsleitung (30) den Aufblasenddruck erreicht, um der Pumpensteuereinheit (42) zu signalisieren, die Pumpe (40) zu stoppen, oder einen Drucksensor in Fließverbindung mit der Rücckopplungsleitung (30) aufweist, wobei die Signale des Drucksensors von der Pumpensteuereinheit (42) überwacht werden, um die Pumpe (40) zu stoppen, sobald der gemessene Druck den Aufblasenddruck erreicht.

14. Fahrzeugsitz-Massagesystem nach einem der vorhergehenden Ansprüche, **dadurch gekennzeichnet, dass** wenigstens einige der Fließwiderstände (52, 80) in das Innere von Luftzellen integriert sind.

15. Fahrzeugsitz-Massagesystem nach Anspruch 14, **dadurch gekennzeichnet, dass** ein Fließwiderstand (52, 80) in die zugehörige Luftzelle integriert ist, indem eine Ventilmembran (80) in eine aufblasbare Eintrittskammer der Luftzelle eingebaut ist, wobei die Ventilmembran (80) so ausgestaltet ist, dass sie durch aufblasenden Fluss in die Eintrittskammer hinein und gegen einen Eintrittskammerwandbereich (52) gedrückt wird, der eine Öffnung (54) hat, durch die Aufblasfluss in eine weitere Kammer der Luftzelle fließt, wobei die Ventilmembran (82) Perforationen (82) in dem der Öffnung (54) zugewandten Gebiet hat, um den Fluss durch die Öffnung (54) durch die Perforationen (82) zu beschränken, wohingegen die Ventilmembran (80) dazu eingerichtet ist, durch Entlüftungsfluss durch die Öffnung (54) von dem Eintrittskammerwandbereich (52) abgehoben zu werden, um dadurch Luft aus der Öffnung (54) und in einen Zwischenraum zwischen der abgehobenen Ventilmembran (80) und dem Eintrittskammerwandbereich (52) und zu einem äußeren Rand der Ventilmembran fließen zu lassen, wo ein oder mehrere offene Randabschnitte (84) es der Luft erlauben, die Perforationen (82) der Ventilmembran (80) zu umgehen, um dadurch eine asymmetrische Flussbeschränkung mit einem höheren Fließwiderstand während des Aufblasens im Vergleich zum Entlüften zu schaffen.

## Revendications

1. Système de massage de siège de véhicule comprenant :
- une pompe (40) pour la fourniture d'air pressurisé ;
un agencement (20) de cellules d'air gonflables distribuées (22, 22', 22") équipées d'une structure de conduit d'air qui présente un orifice d'accès raccordé pour recevoir un flux d'air de la pompe et qui présente pour chaque cellule d'air de l'agencement une connexion de flux (26) pour le flux d'air vers et depuis la cellule d'air ;
une pluralité de résistances au flux (50, 82) agencées dans l'agencement de cellules d'air de sorte que la résistance au flux aux cellules d'air augmente à partir de l'orifice d'accès avec une distance croissante de l'orifice d'accès, et que l'expansion en hauteur de cellules d'air due au gonflage se propage dans une direction depuis l'orifice d'accès à travers l'agencement et atteint enfin une région d'extrémité pneumatique de l'agencement avec un temps de retard ;
une valve (10) agencée entre la pompe (40) et l'orifice d'accès de l'agencement, dans lequel la valve (10) est configurée de sorte à être commutable entre un état de gonflage et un état de dégonflage, dans lequel la valve est agencée pour permettre, dans l'état de gonflage, à un flux d'air de la pompe d'entrer dans l'orifice d'accès de l'agencement, et pour permettre, dans l'état de dégonflage, à l'air de s'écouler des cellules d'air hors de l'orifice d'accès de l'agencement à purger ; et
des moyens de commande de la valve pour commuter entre l'état de gonflage et l'état de dégonflage ;
**caractérisé en ce que** les moyens de commande de la valve incluent un transmission de rétroaction pneumatique ou mécanique (30) raccordant la région d'extrémité pneumatique de l'agencement avec la valve (10), dans lequel la transmission de rétroaction et la valve sont agencées de sorte que la valve soit commutée de l'état de gonflage à l'état de dégonflage lorsque la pression au niveau de la région d'extrémité pneumatique excède un niveau seuil.

2. Système de massage de siège de véhicule selon la revendication 1, **caractérisé en ce que** la valve est configurée de sorte à être une valve à commande pneumatique (10) présentant un orifice d'entrée de commande (3) et que la transmission de rétroaction comprend une ligne de rétroaction pneumatique (30) en communication avec la région d'extrémité pneumatique de l'agencement (20) et raccordée à l'orifice de commande (3) de la valve à commande pneumatique (10), dans lequel la valve est agencée pour commuter de l'état de gonflage à l'état de dégonflage lorsque la pression à l'orifice de commande excède un niveau de commutation correspondant à la pression au niveau de la région d'extrémité pneumatique de l'agencement excédant le niveau seuil.

3. Système de massage de siège de véhicule selon la revendication 2, **caractérisé en ce que** la valve à commande pneumatique (10) comprend un boîtier de valve (11) présentant, outre l'orifice de commande (3), un orifice de pompe (1) en communication avec la pompe (40), un orifice d'agencement (2) raccordé à l'orifice d'accès, et un orifice de ventilation (4) communiquant avec l'atmosphère environnementale, et qu'un piston (12) comme élément de valve à l'intérieur du boîtier de valve (11) est incliné par un ressort (16) dans une position correspondant à l'état de dégonflage de la valve lorsqu'aucune pression d'entrée de la pompe (40) n'est appliquée à l'orifice de pompe, et que la valve est configurée de sorte que lorsque la pression d'entrée de la pompe (40) est présente à l'orifice de pompe, le piston (12) soit déplacé contre l'inclinaison du ressort (16) dans une position correspondant à l'état de gonflage de la valve jusqu'à ce que la pression à l'orifice de gonflage (3) atteigne la pression seuil qui amène le piston à être déplacé dans la position correspondant à l'état de dégonflage de la valve.

4. Système de massage de siège de véhicule selon la revendication 3, **caractérisé en ce que** le boîtier de valve (11) définit une chambre de valve en son intérieur dans laquelle le piston est logé pour être coulissant dans la direction longitudinale, que l'orifice de pompe (1) et l'orifice de commande (3) sont situés au niveau de faces d'extrémité opposée du boîtier de valve (11) de sorte que la pression dans l'orifice de pompe (1) exerce une force sur le piston (12) dans une première direction et la pression dans l'orifice de commande (3) provoque une force sur le piston opposée à la première direction, et que l'orifice d'agencement (2) et l'orifice de ventilation (4) sont situés dans une paroi latérale du boîtier de valve, dans lequel le ressort (16) exerce une force d'inclinaison dans la direction longitudinale sur le piston (12) le poussant dans la position correspondant à l'état de dégonflage, dans lequel, lorsque la pression de pompe est appliquée à l'orifice de pompe (1), le piston (12) est ainsi déplacé contre l'inclinaison de ressort, ouvrant ainsi un canal de dérivation (13) dans une paroi intérieure de la chambre de valve permettant au flux d'air de l'orifice de pompe (1) à l'orifice d'agencement (2) d'établir l'état de gonflage de la valve, et dans lequel une membrane élastique (18) ferme un espace intérieur de la partie de boîtier de valve près de l'orifice de commande (3) de sorte que la pression à l'orifice de commande (3) amène la membrane (18) à être renflée vers l'intérieur et à buter contre une bouton de libération (14) du piston (12) pour déplacer le piston (12) vers la position correspondant à l'état de dégonflage de la valve.

5. Système de massage de siège de véhicule selon l'une quelconque des revendications précédentes, **caractérisé en ce que** l'agencement (20) de cellules d'air comprend au moins une série de cellules d'air suivantes (22, 22', 22"), que les résistances au flux sont agencées de sorte que la résistance au flux augmente à partir d'une première cellule d'air (22) de la série qui est près de l'orifice d'accès de l'agencement et augmente le long de cette série de cellules d'air cellule d'air par cellule d'air à une dernière cellule d'air dans la série de cellules d'air de sorte que les cellules d'air soient gonflées en séquence avec un décalage de temps entre chaque paire de cellules d'air suivantes (22, 22', 22") atteignant l'état gonflé.

6. Système de massage de siège de véhicule selon la revendication 5, **caractérisé en ce que** l'agencement (20) de cellules d'air (22, 22', 22") comprend un conduit principal (24) s'étendant depuis l'orifice d'accès de l'agencement, et une pluralité de cellules d'air (22, 22', 22") agencées le long du conduit principal (24), chaque cellule d'air communiquant via une connexion de flux (26) avec le conduit principal (24), dans lequel les cellules d'air (22, 22', 22") et les connexions de flux respectives (26) au conduit principal sont distribuées à différentes distances le long du conduit principal (24) de l'orifice d'accès, formant ainsi une ou deux séries de cellules d'air (22, 22', 22") le long du conduit principal (24).

7. Système de massage de siège de véhicule selon la revendication 5, **caractérisé en ce que** le conduit principal (24) de l'agencement s'étend le long d'une ligne droite et que des cellules d'air (22, 22', 22") sont raccordées au conduit principal pour former une série linéaire de cellules d'air.

8. Système de massage de siège de véhicule selon l'une quelconque des revendications 6 ou 7, **caractérisé en ce que** la ligne de rétroaction (30) communique avec la dernière cellule d'air (22") le long du conduit principal qui est, en termes de longueur du trajet de flux de l'orifice d'accès à la cellule d'air respective, le plus loin de l'orifice d'accès.

9. Système de massage de siège de véhicule selon l'une quelconque des revendications 5 à 8, **caractérisé en ce que** les résistances au flux sont dimensionnées de sorte que le décalage de temps entre une cellule d'air atteignant son état gonflé et la prochaine cellule d'air suivante dans la série de cellules d'air atteignant leurs états gonflés soit supérieur à 0,5 s, de préférence supérieur à 1 s.

10. Système de massage de siège de véhicule selon l'une quelconque des revendications précédentes, **caractérisé en ce qu'**au moins certaines des résistances au flux (52, 80) de l'agencement (20) de cellules d'air sont des résistances au flux asymétriques en termes de direction de flux **en ce que** la résistance au flux générée dans la direction de flux de l'orifice d'accès pendant le gonflage de cellules d'air soit supérieure à la résistance au flux générée dans la direction de flux inversé à l'orifice d'accès pendant le flux de dégonflage.

11. Système de massage de siège de véhicule selon la revendication 10, **caractérisé en ce que** les résistances au flux asymétriques (52, 80) sont configurées de sorte que la résistance au flux générée pendant le flux de gonflage soit au moins deux fois plus élevée que la résistance au flux générée pendant le flux de dégonflage.

12. Système de massage de siège de véhicule selon l'une quelconque des revendications précédentes, **caractérisé en ce que** le système comprend en outre un dispositif de commande de pompe (42) qui est agencé pour lancer le fonctionnement de la pompe (40) et pour arrêter le fonctionnement de la pompe après la période de gonflage prédéterminée ou si le dispositif de commande de pompe (42) a déterminé que le gonflage de l'agencement de cellules d'air a été complété sur la base de la détection d'une augmentation rapide dans l'alimentation en courant à la pompe (40) ou sur la base de la pression dans la ligne de rétroaction (30) atteignant une pression finale de gonflage, et pour lancer le fonctionnement de la pompe après une période intermédiaire prédéterminée.

13. Système de massage de siège de véhicule selon la revendication 12, **caractérisé en ce que** le système comprend un commutateur de pression en communication de flux avec la ligne de rétroaction (30) qui est actionné lorsque la pression dans la ligne de rétroaction (30) atteint la pression finale de gonflage pour signaler au dispositif de commande de pompe (42) d'arrêter la pompe (40), ou un capteur de pression en communication de flux avec la ligne de rétroaction (30), les signaux duquel capteur de pression étant surveillés par le dispositif de commande de pompe (42) pour arrêter la pompe (40) une fois que la pression détectée atteint la pression finale de gonflage.

14. Système de massage de siège de véhicule selon l'une quelconque des revendications précédentes, **caractérisé en ce qu'**au moins certaines des résistances au flux (52, 80) sont intégrées à l'intérieur de cellules d'air.

15. Système de massage de siège de véhicule selon la revendication 14, **caractérisé en ce qu'**une résistance au flux (52, 80) est intégrée dans la cellule d'air associée par incorporation d'une membrane de valve (80) dans un compartiment d'entrée gonflable de la cellule d'air, laquelle membrane de valve (80) est agencée pour être poussée par flux de gonflage dans le compartiment d'entrée et contre une portion de paroi de compartiment d'entrée (52) présentant une ouverture (54) à travers laquelle le flux de gonflage s'écoule dans un autre compartiment de la cellule d'air, dans lequel la membrane de valve présente des perforations (82) dans la zone tournée vers l'ouverture (54) pour restreindre le flux à travers l'ouverture (54) par les perforations (82), alors que la membrane de valve (80) est agencée pour être levée de la portion de paroi de compartiment d'entrée (52) par flux de dégonflage à travers l'ouverture (54) pour permettre ainsi à l'air de s'écouler hors de l'ouverture (54) et dans un espace intermédiaire entre la membrane de valve levée (80) et la portion de paroi de compartiment d'entrée (52) et vers une arête extérieure de la membrane de valve où une ou plusieurs sections d'arête ouvertes (84) permettent à l'air de contourner les perforations (82) de la membrane de valve (80), pour fournir ainsi une restriction de flux asymétrique avec une résistance au flux plus élevée pendant le gonflage par rapport au dégonflage.
